Europäisches Patentamt

European Patent Office

Office européen des brevets

(19)

(11) **EP 0 954 755 B1**

(12) **EUROPEAN PATENT SPECIFICATION**

(45) Date of publication and mention
of the grant of the patent:
**02.10.2002 Bulletin 2002/40**

(51) Int Cl.7: **G01S 7/35**, G01S 7/36

(21) Application number: **98905288.1**

(22) Date of filing: **08.01.1998**

(86) International application number:
**PCT/EP98/00147**

(87) International publication number:
**WO 98/033073 (30.07.1998 Gazette 1998/30)**

(54) **RADAR APPARATUS**

RADARVORRICHTUNG

RADAR

(84) Designated Contracting States:
**CH DE FR GB LI NL SE**

(30) Priority: **23.01.1997 NL 1005067**

(43) Date of publication of application:
**10.11.1999 Bulletin 1999/45**

(73) Proprietor: **THALES NEDERLAND B.V.
7550 GD Hengelo (NL)**

(72) Inventors:
• **THOMASSEN, Sierk, Michael
NL-7555 GM Hengelo (NL)**

• **TEULINGS, Wilhelmus, Antonius
NL-7482 WH Haaksbergen (NL)**

(74) Representative: **Lucas, Laurent Jacques et al
Thales Intellectual Property,
13, avenue du Président Salvador Allende
94117 Arcueil Cedex (FR)**

(56) References cited:
**EP-A- 0 226 401 FR-A- 2 686 156
GB-A- 2 218 293**

Printed by Jouve, 75001 PARIS (FR)

**Description**

The invention relates to a radar apparatus designed for the periodic transmission of a frequency-swept transmitter signal and the subsequent reception of return signals of this transmitter signal, provided with a receiver unit comprising a mixer stage for generating heterodyne signals from received return signals and a reference signal derived from the transmitter signal, an analog preamplifier, a detector for detecting pulsed interference signals, an analog-to-digital converter, a fourier transformer, for the conversion of the heterodyne signals into target-representing signals and an interference suppressor connected to the detector, for suppressing received pulsed interference signals.

A radar apparatus of this type is for instance known from patent application GB 2 218 293 A. In this known radar apparatus of the FMCW type, the detector switches a sample-hold device in the receiver into a hold position during pulsed interference, such that the pulsed interference will not reach the fourier transformer. However, during the time the sample-hold device is in the hold position, received signals will be distorted. This distortion may give rise to an increased noise floor or of the occurrence of spurious targets in the fourier spectrum.

The invention at least substantially obviates this drawback and is characterised in that that the interference suppressor comprises suppressing means for suppressing digital values generated at the output of the analog-to-digital converter during pulsed interference; and a buffer storage device, incorporated between the analog-to-digital converter and the fourier transformer, for storing measured values obtained from the return signals of at least two successive transmitter signals; and reconstruction means for reconstructing suppressed measured values for the return signals of a transmitter signal on the basis of measured values obtained from the return signals of the previous transmitter signal and the subsequent transmitter signal.

In order to at least substantially preclude an increase of the noise floor and the occurrence of spurious targets, a further advantageous embodiment of the radar apparatus according to the invention is characterised in that the reconstruction means comprise interpolation means.

In generating substitute measured values, the invention is based on the assumption that strong return signals are usually produced by nearby objects and that in this type of radar apparatus, these strong return signals manifest themselves as low-frequency signals which, moreover, hardly change for successively transmitted signals.

A further advantageous embodiment of the radar apparatus according to the invention is thereto characterised in that, for each measured value missing, the interpolation means perform a linear interpolation on a corresponding measured value obtained from the previous transmitter signal and a corresponding measured value obtained from the subsequent transmitter signal.

The invention will now be further explained with reference to the following figures of which:

Fig. 1      represents a block diagram of an embodiment of the radar apparatus;

Fig. 2A      represents a heterodyne signal containing a pulsed interference signal;

Fig. 2B      represents this heterodyne signal containing a suppressed pulsed interference signal;

Fig. 2C      represents this heterodyne signal containing a suppressed pulsed interference signal after reconstruction.

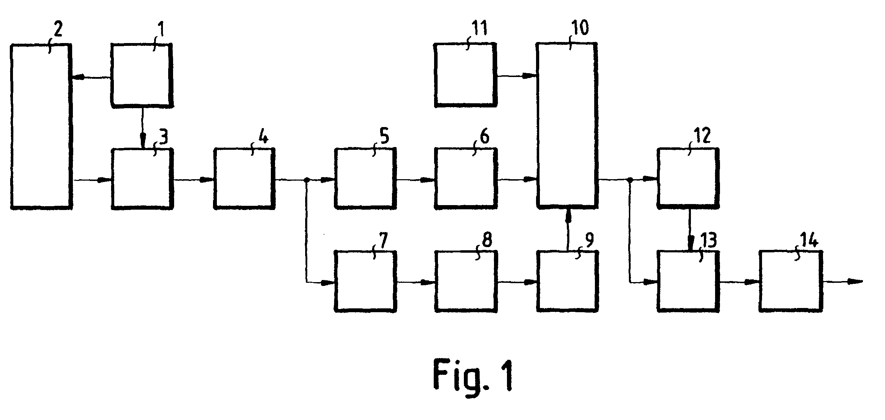

Fig. 1 shows a block diagram of a feasible embodiment of the radar apparatus according to the invention in which a radar transmitter 1 periodically generates a RF frequency-swept transmitter signal. Radar transmitter 1 may for instance be a YIG oscillator controlled with a sawtooth-shaped variable current, possibly followed by a RF amplifier. The signal generated by radar transmitter 1 is transmitted by an antenna system 2. Antenna system 2 also receives returns of the transmitted signal. These return signals are applied to a mixer stage 3 to be mixed with a reference signal derived from the transmitter signal, e.g. an attenuated transmitter signal. Mixer stage 3 may be preceded by a low-noise preamplifier, which enhances the sensitivity of the radar. The transmitter signals can be transmitted continuously, as a result of which the radar apparatus operates as an FMCW radar well-known in the art; an alternative solution is to transmit the signals intermittently. An essential aspect is that mixer stage 3 delivers a heterodyne signal which represents targets as periodic signals whose frequencies are a measure for the target range and whose amplitudes are a measure for the target cross-section. The heterodyne signal produced by mixer stage 3 is subsequently applied to a first amplifier 4 and a second amplifier 5 after which it is digitised in an analog-to-digital converter 6. To prevent pulsed interference signals from degrading the proper functioning of the radar apparatus, there is provided an analog detector 7, connected to the output of first amplifier 4, followed by a filter 8 and a pulse generator 9. Depending on the radar apparatus parameters and the anticipated interference pulses, the gain of first amplifier 4 and the filter characteristic of filter 8 are chosen in combination such that pulse generator 9 only produces an output signal if antenna system 2 receives an interference pulse. Filter 8 is for instance a high-pass filter that blocks an interference signal, but admits the leading edge of a pulsed interference signal. This edge may then serve to trigger pulse generator 9, which produces a switching pulse with a predetermined duration. The switching pulse is applied to a multiplexer 10, along with output signals of analog-to-digital converter 6. These output signals continuously appear at the output of multiplexer 10, unless pulse generator 9 produces a switching pulse. If such is the case, a flag value generated by a value generator 11 will be present at the output of multiplexer 10, a value that does not correspond to values supplied by analog-to-digital convertor 6 so that, in processing the digitised heterodyne signals, the need for reconstruction becomes apparent.

It frequently occurs that a ship-mounted FMCW radar experiences severe interference from a pulse radar likewise disposed on the ship. Generally speaking, it will then be possible to derive a second switching pulse from the pulse radar, which pulse is active during the transmission of a pulse by the pulse radar. This second switching pulse may then be logically combined with the switching pulse to obtain a combined switching pulse.

To enable reconstruction, the output signal of the multiplexer 10 controlled by the switching pulse is written to a buffer storage device 12 which may comprise digitised heterodyne signals related to at least two signals transmitted in succession. Buffer storage device 12 is connected to an interpolator 13 which also receives digitised heterodyne signals related to the most recently transmitted signal. On the basis of available signals, interpolator 13 reconstructs the digitised heterodyne signal related to the next-most recently transmitted signal by means of linear interpolation for each value and subsequently passes this reconstructed digitised heterodyne signal to a fourier transformer 14 which, in a manner known in the art, converts this signal into a target-representing signal suitable for presentation on a radar display. For the reconstruction, this implies that if for a sample x(s,k), the flag is set, this value is substituted by the value X(s,k), with:

$$X(s,k) = \tfrac{1}{2}\{x(s-1,k)+x(s+1,k)\}$$

in which x(s,k) represents the k-th digitised value related to the s-th transmitter signal, x(s-1,k) is the k-th digitised value related to the s-1-th transmitter signal, and x(s+1,k) is the k-th digitised value related to the s+1-th transmitter signal. If, for a sample x(s,k) the flag has not been set, it is obvious that:

$$X(s,k) = x(s,k)$$

It is possible to involve more than three transmitter signals in the interpolation, although this is only useful if corresponding samples for two successive transmitter signals show interference, a situation that will hardly ever occur.

A state-of-the-art data processor usually only contains a general-purpose RAM device and a digital signal processor (DSP). If a data processor of this type is used, the buffer storage device 12 constitutes part of the RAM device, which enables the interpolation and the fourier transformation to be performed by the DSP.

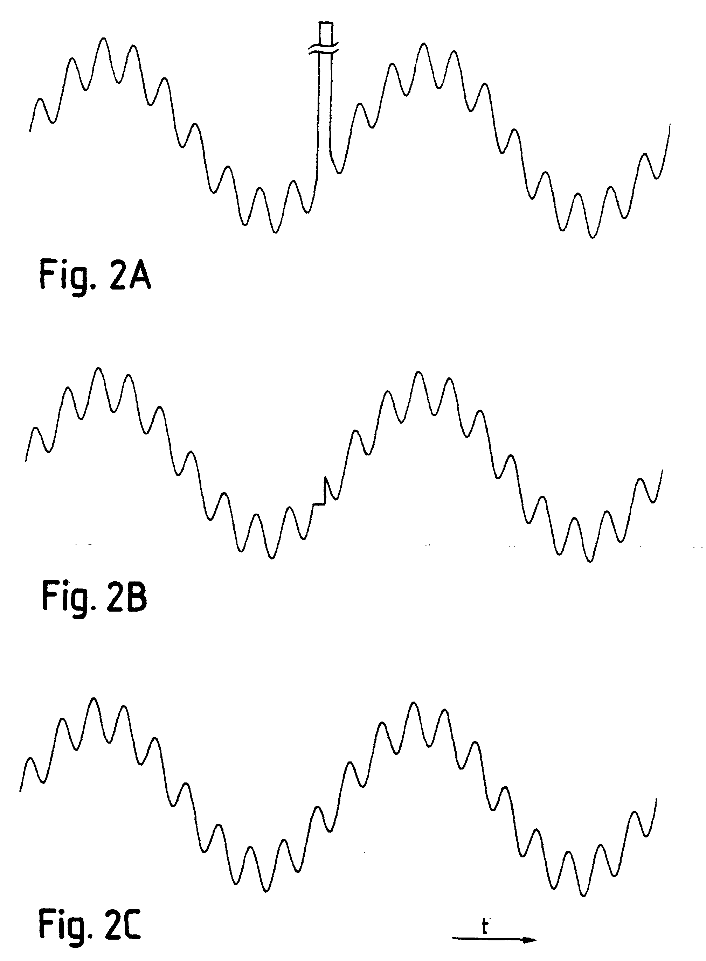

Fig. 2A represents a heterodyne signal containing a pulsed interference signal. The duration of the heterodyne signal related to one transmitter signal is 500 micro seconds, the duration of the pulsed interference signal is 10 micro seconds. The heterodyne signal reveals the presence of two periodic signals, both originating from relatively nearby objects. Small-sized targets of interest are imperceptible as they lie below the noise level, their presence is detected only after fourier transformation of the heterodyne signal. In the presence of the pulsed interference signal, small-sized targets remain imperceptible; these are usually 10-20 dB below the fourier spectrum of the pulsed interference signal. Moreover, the fourier spectrum of the pulsed interference signals gives rise to the occurrence of spurious targets which exceed the thermal noise level by typically 20 dB.

Fig. 2B represents the same heterodyne signal in which the pulsed interference has been suppressed, i.e. during the presence of the pulsed interference signal, the measured values have been substituted by the latest valid measured value. After fourier transformation, the resulting imperfection again results in a fourier spectrum in which targets may be lost and spurious targets may occur, the effect of which however is far less noticeable than that produced by the pulsed interference signal originally present.

Fig. 2C represents the same heterodyne signal in which, according to the invention, the pulsed interference signal has been suppressed and the measured values determined during the presence of the pulsed interference signal have been substituted by an interpolation of measured values obtained from the previous and the subsequent transmitter signal. It should be taken into account that the heterodyne signals produced by nearby, strong objects undergo little change for successive transmitter signals. For this type of heterodyne signals, the interpolated measured values are near-perfect. The interpolated measured values for small-sized, distant objects may on the other hand not be perfect, although these objects will after fourier transformation not cause any problems because the fourier spectrum related to the error made is below the thermal noise level. In actual fact, it is particularly the clutter component of the heterodyne signal that is subjected to reconstruction, because an imperfection in that component will, after fourier transformation, cause an increased noise floor and the occurrence of spurious targets.

**Claims**

**1.** Radar apparatus designed for the periodic transmission of a frequency-swept transmitter signal and the subsequent reception of return signals of this transmitter signal, provided with a receiver unit comprising a mixer stage for generating heterodyne signals from received return signals and a reference signal derived from the transmitter signal, an analog preamplifier, a detector for detecting pulsed interference signals, an analog-to-digital converter, a fourier transformer, for the conversion of the heterodyne signals into target-representing signals and an interference suppressor connected to the detector, for suppressing received pulsed interference signals, **characterised in that** the interference suppressor comprises suppressing means for suppressing digital values generated at the output of the analog-to-digital converter during pulsed interference; and a buffer storage device, incorporated between the analog-to-digital converter and the fourier transformer, for storing measured values obtained from the return signals of at least two successive transmitter signals; and reconstruction means for reconstructing suppressed measured values for the return signals of a transmitter signal on the basis of measured values obtained from the return signals of the previous transmitter signal and the subsequent transmitter signal.

2. Radar apparatus as claimed in claim 1, **characterised in that** the reconstruction means comprise interpolation means.

3. Radar apparatus as claimed in claim 2, **characterised in that**, for each measured value missing, the interpolation means perform a linear interpolation on a corresponding measured value obtained from the previous transmitter signal and a corresponding measured value obtained from the subsequent transmitter signal.


**Patentansprüche**

1. Radarvorrichtung, die für die periodische Übertragung eines frequenzgewobbelten Sendersignals und für den nachfolgenden Empfang eines Rückkehrsignals dieses Sendersignals entworfen ist und versehen ist mit einer Empfängereinheit, die eine Mischerstufe zum Erzeugen von Überlagerungssignalen aus empfangenen Rückkehrsignalen und eines aus dem Sendersignal abgeleiteten Referenzsignals umfaßt, einem Detektor zum Erfassen gepulster Störsignale, einem Analog/Digital-Umsetzer, einer Fourier-Transformationseinrichtung für die Umsetzung der Überlagerungssignale in ein Ziel repräsentierende Signale sowie einer Störunterdrückungseinrichtung, die an den Detektor angeschlossen ist, um empfangene gepulste Störsignale zu unterdrücken, **dadurch gekennzeichnet, daß** die Störunterdrückungseinrichtung Unterdrükkungsmittel, die digitale Werte, die am Ausgang des Analog/Digital-Umsetzers während der gepulsten Störung erzeugt werden, unterdrücken; eine Pufferspeichervorrichtung, die zwischen den Analog/Digital-Umsetzer und die Fourier-Transformationseinrichtung geschaltet ist und gemessene Werte speichert, die aus den Rückkehrsignalen wenigstens zweier aufeinanderfolgender Sendersignale erhalten werden; und Rekonstruktionsmittel, die unterdrückte gemessene Werte der Rückkehrsignale eines Sendersignals auf der Grundlage gemessener Werte, die aus den Rückkehrsignalen des vorhergehenden Sendersignals und des nachfolgenden Sendersignals erhalten werden, rekonstruieren, umfaßt.

2. Radarvorrichtung nach Anspruch 1, **dadurch gekennzeichnet, daß** die Rekonstruktionsmittel Interpolationsmittel umfassen.

3. Radarvorrichtung nach Anspruch 2, **dadurch gekennzeichnet, daß** für jeden fehlenden gemessenen Wert die Interpolationsmittel eine lineare Interpolation an einem entsprechenden gemessenen Wert, der aus dem vorhergehenden Sendersignal erhalten wird, und an einem entsprechenden gemessenen Wert, der aus dem nachfolgenden Sendersignal erhalten wird, ausführen.


**Revendications**

1. Appareil radar conçu pour l'émission périodique d'un signal d'émetteur à déviation de fréquence et la réception successive des signaux de retour de ce signal d'émetteur, comprenant un module de réception incluant un étage de mélange pour la génération de signaux hétérodynes provenant des signaux de retour reçus et d'un signal de référence dérivé du signal d'émetteur, un préamplificateur analogique, un détecteur pour la détection de signaux d'interférences à impulsions, un convertisseur analogique-numérique, un transformateur de Fourier, pour la conversion des signaux hétérodynes en signaux représentant une cible et un dispositif anti-parasite connecté au détecteur, pour la suppression des signaux reçus d'interférences à impulsions, **caractérisé en ce que** le dispositif anti-parasite comprend des moyens anti-parasite pour la suppression des valeurs numériques générées à la sortie du convertisseur analogique-numérique pendant les interférences à impulsions et un dispositif de stockage tampon, intégré entre le convertisseur analogique-numérique et le transformateur de Fourier pour le stockage des valeurs mesurées obtenues à partir des signaux de retour d'au moins deux signaux d'émetteur successifs ; et des moyens de reconstruction pour la reconstruction des valeurs mesurées supprimées des signaux de retour d'un signal d'émetteur sur la base des valeurs mesurées obtenues à partir des signaux de retour du signal d'émetteur précédent et du signal d'émetteur suivant.

2. Appareil radar tel selon la revendication 1, **caractérisé en ce que** les moyens de reconstruction comprennent des moyens d'interpolation.

3. Appareil radar selon la revendication 2, **caractérisé en ce que**, pour chaque valeur manquante mesurée, les moyens d'interpolation effectuent une interpolation linéaire sur une valeur mesurée correspondante obtenue à partir du signal d'émetteur précédent et une valeur mesurée correspondante obtenue à partir du signal d'émetteur suivant.

Fig. 1

Fig. 2A

Fig. 2B

Fig. 2C

$t$